# EUROPEAN PATENT SPECIFICATION

(11) **EP 4 608 893 B1**
(45) Date of publication and mention of the grant of the patent: **10.06.2026**
(21) Application number: 23809435.3
(22) Date of filing: 26.10.2023
(51) Int. Cl.: C08G 63/199, C08G 63/672, C08L 67/02, C09J 167/02

(54) **RECYCLEABLE HOT MELT ADHESIVE COPOLYESTER COMPOSITIONS**
WIEDERVERWENDBARE HEISSSCHMELZENDE COPOLYESTERZUSAMMENSETZUNGEN
COMPOSITIONS DE COPOLYESTER ADHÉSIVES THERMOFUSIBLES RECYCLABLES

(30) Priority: 28.10.2022 US 202263420109 P
(43) Date of publication of application: 03.09.2025
(73) Proprietor: Eastman Chemical Company, Kingsport, TN 37660 (US)
(72) Inventor: STRAND, Marc, Alan, Kingsport, TN 37664 (US); BRICKEY, Kayla, Breanne, Poulsbo, WA 98370 (US)
(74) Representative: Ricker, Mathias
(86) International application number: PCT/US2023/077833
(87) International publication number: WO 2024/092080

(56) References cited:
- EP-B1- 0 126 766

## Description

### FIELD OF THE INVENTION

The present disclosure relates to hot melt adhesive compositions made from blends of copolyester compositions which comprise residues of terephthalic acid, 1,4-cyclohexanedimethanol (CHDM), ethylene glycol (EG), neopentyl glycol (NPG), and/or 2,2,4,4-tetramethyl-1,3-cyclobutanediol (TMCD), in certain compositional ranges having certain advantages and improved properties including recyclability.

### BACKGROUND OF THE INVENTION

Historically, hot melt adhesive compositions used in packaging applications are made from polyolefin materials and the packaging containers in these applications are made from polymers such as polypropylene (PP), high-density polyethylene (HDPE) or styrene. The packaging industry, however, is currently moving towards making these types of containers recyclable in a PET stream or making them with recycle content. This trend is due to requirements to increase the recycle content in packaging articles and/or to make them more recyclable to avoid landfills or incineration. Thus, there is a shift towards making these containers from polyesters that are recyclable in a PET stream rather than from other polymers such as polypropylene (PP) or high-density polyethylene (HDPE) and styrene that are not recyclable in a PET stream. There is also a need to have the adhesives used on these containers to be made from polymers that are recyclable in a PET stream, in particular, that are RIC-1 compatible. European patent EP 0 126 766 B1 discloses copolyester adhesive blends comprising a crystallizable and an amorphous copolyester.

In this disclosure, polyester compositions have been discovered that can replace the polyolefin-based adhesives with adhesive made from copolyester compositions that are RIC-1 compatible.

The present disclosure addresses a long felt commercial need for hot melt adhesives produced from copolyester compositions that have the following desired properties: (1) good adhesive strength, (2) good processibility, (3) good peel force, and (4) RIC-1 compatibility. It is also desirable that these adhesive compositions are made from materials that can be readily recycled, contain recycled material, and/or be made with materials that are not considered to be harmful to the environment either as a raw material or as final polymeric materials (such as, styrene, polystyrene, polyolefins, etc.), as is the case with the disclosed copolyester compositions.

### BRIEF SUMMARY OF THE INVENTION

One aspect of the present disclosure is an adhesive composition comprising a copolyester blend which comprises:
A) 25-75 wt% of at least one copolyester composition comprising:
   (a) a dicarboxylic acid component comprising:
      (i) 85 to 100 mole % of terephthalic acid residues, and
      (ii) 0 to 15 mole % of aromatic and/or aliphatic dicarboxylic acid residues having up to 20 carbon atoms; and
   (b) a glycol component comprising:
      (i) 0 to 15 mole % of one or more of 2,2,4,4-tetramethyl-1,3-cyclobutanediol (TMCD) residues; 1,4-cyclohexanedimethanol (CHDM) residues; NPG residues, and DEG residues, whether or not formed in situ; and
      wherein the remainder of the glycol component comprises:
      (ii) residues of ethylene glycol, and
      (iii) optionally, 0 to 10 mole% of the residues of at least one other modifying glycol;
      wherein the total mole% of the dicarboxylic acid component is 100 mole%, and wherein the total mole% of the glycol component is 100 mole%; and
B) 75-25 wt% of at least one copolyester composition comprising
   (a) a dicarboxylic acid component comprising:
      (i) 85 to 100 mole % of terephthalic acid residues, and
      (ii) 0 to 15 mole % of aromatic and/or aliphatic dicarboxylic acid residues having up to 20 carbon atoms; and
   (b) a glycol component comprising:
      (i) 20 to 50 mole % DEG residues; and
      (ii) 50-80 mole % of ethylene glycol (EG) residues, and
      (iii) optionally, 0 to 10 mole% of the residues of at least one other modifying glycol;
   wherein the total mole% of the dicarboxylic acid component is 100 mole%, and wherein the total mole% of the glycol component is 100 mole%.

In one embodiment, the copolyester blend has a melting temperature (Tₘ) of 190-255°C.

In one embodiment, the copolyester blend has a Tg of from 50°C or greater.

In one embodiment, the copolyester blend has an inherent viscosity of from 0.60 to 1.0 dL/g.

In one embodiment, the copolyester blend enable adhesive compositions with a peel force of 1-15N.

In one aspect, the adhesive compositions of the present disclosure are recyclable in a PET recycle stream.

### DETAILED DESCRIPTION

The present disclosure may be understood more readily by reference to the following detailed description of certain embodiments of the disclosure and the working examples. In accordance with the purpose(s) of this disclosure, certain embodiments of the disclosure are described in the Summary of the Invention and are further described herein below. Also, other embodiments of the disclosure are described herein.

In form fill seal packaging, there are three components: the base tray, the lidding film and the adhesion layer. There are copolyester compositions that provide the base trays and the lidding films that are RIC-1 compatible materials. The present disclosure provides adhesive layer compositions that are also RIC-1 compatible. The compositions of the present disclosure will enable a mono-material package, where the entire package, the base tray, the lidding film and the adhesion layer are all recyclable in a PET recycling stream.

The adhesive compositions of the present disclosure are copolyester blends which comprises
Component A:
   A) 25-75 wt% of at least one copolyester composition comprising:
      (a) a dicarboxylic acid component comprising:
         (i) 85 to 100 mole % of terephthalic acid residues, and
         (ii) 0 to 15 mole % of aromatic and/or aliphatic dicarboxylic acid residues having up to 20 carbon atoms; and
      (b) a glycol component comprising:
         (i) 0 to 15 mole % of one or more of 2,2,4,4-tetramethyl-1,3-cyclobutanediol (TMCD) residues; 1,4-cyclohexanedimethanol (CHDM) residues; NPG residues, and DEG residues, whether or not formed in situ; and
         wherein the remainder of the glycol component comprises:
         (ii) residues of ethylene glycol, and
         (iii) optionally, 0 to 10 mole% of the residues of at least one other modifying glycol;
         wherein the total mole% of the dicarboxylic acid component is 100 mole%, and wherein the total mole% of the glycol component is 100 mole%;
and Component B:
   B) 75-25 wt% of at least one copolyester composition comprising
   (a) a dicarboxylic acid component comprising:
      (i) 85 to 100 mole % of terephthalic acid residues, and
      (ii) 0 to 15 mole % of aromatic and/or aliphatic dicarboxylic acid residues having up to 20 carbon atoms; and
   (b) a glycol component comprising:
      (i) 20 to 50 mole % DEG residues; and
      (ii) 50-80 mole % of ethylene glycol (EG) residues, and
      (iii) optionally, 0 to 10 mole% of the residues of at least one other modifying glycol;
      wherein the total mole% of the dicarboxylic acid component is 100 mole%, and wherein the total mole% of the glycol component is 100 mole%;
and optionally
wherein the copolyester blend has a melting temperature (Tₘ) of 190-255°C.

In one aspect the present disclosure pertains to copolyester, hot melt adhesive compositions that are recyclable in a PET stream. In 2017, California Assembly Bill No. 906 - Beverage containers: polyethylene terephthalate was signed into law, and it defines "polyethylene terephthalate" (PET) for purposes of resin code labeling as a plastic that meets certain conditions, including limits with respect to the chemical composition of the polymer and a melting peak temperature within a specified range. AB-906 adds Section 18013 to California's Public Resources Code, which reads, in part:
"Polyethylene terephthalate (PET)" means a plastic derived from a reaction between terephthalic acid or dimethyl terephthalate and monoethylene glycol as to which both of the following conditions are satisfied:
a. The terephthalic acid or dimethyl terephthalate and monoethylene glycol reacted constitutes at least 90 percent of the mass of the monomer reacted to form the polymer.
b. The plastic optionally exhibits a melting peak temperature that is between 225 degrees Celsius and 255 degrees Celsius, as determined during the second thermal scan using procedure 10.1 as set forth in ASTM International (ASTM) D3418 with a heating rate of a sample at 10 degrees Celsius per minute."

As such, copolyesters, and blends of the aforementioned which meet both of the conditions outlined in AB-906, are acceptable for being called "PET", and thus such materials are likely to be compatible in current PET recycle streams. The melting points of the blend compositions in the present disclosure make them acceptable under this definition as PET, and thus, compatible in the current PET recycle streams.

During the recycling process, drying of the PET flake is required to remove residual water that remains with the PET through the recycling process. Typically, PET is dried at temperatures above 150°C. At those temperatures, typical copolyester resins will soften and become sticky, often creating clumps with PET flakes. These clumps must be removed before further processing. These clumps reduce the yield of PET flake from the process and create an additional handling step.

Also, it has been found that certain combinations of glycol monomers in resin compositions can produce compositions and articles with good performance properties and that are also crystallizable such that they do not impact the recycling of the PET flake. These compositions and articles can be processed with recycled PET and end up as a component in the recyclable PET flake leaving the recycling process.

The term "container" as used herein is understood to mean a receptacle in which material is held or stored. Containers include but are not limited to trays, base trays, food trays, ovenable food trays, bottles, bags, vials, tubes, cans, and jars. Applications in the industry for these types of containers include but are not limited to medical, automotive, food, beverage, cosmetics, and personal care applications.

In one aspect, the containers and bottles described herein are useful for various applications, such as, food storage, food packaging, ovenable food containers and packaging; cosmetics including make-up, liquids and creams; personal care, household detergents, hair care products including shampoos and conditioners; cleaning supplies, lotions, soaps, automotive fluids including oil and antifreeze, food and cooking supplies including olive oils, spices, cooking oils, vegetable oils, soups, sauces, creams, and condiments; beverages, sports drinks, water bottles, juices and milk.

The term "polyester", as used herein, is intended to include "copolyesters" and is understood to mean a synthetic polymer prepared by the reaction of one or more difunctional carboxylic acids and/or multifunctional carboxylic acids with one or more difunctional hydroxyl compounds and/or multifunctional hydroxyl compounds, for example, branching agents. Typically, the difunctional carboxylic acid can be a dicarboxylic acid and the difunctional hydroxyl compound can be a dihydric alcohol, for example, glycols and diols. The term "glycol" as used herein includes, but is not limited to, diols, glycols, and/or multifunctional hydroxyl compounds, for example, branching agents. Alternatively, the difunctional carboxylic acid may be a hydroxy carboxylic acid, for example, p-hydroxybenzoic acid, and the difunctional hydroxyl compound may have an aromatic nucleus bearing 2 hydroxyl substituents, for example, hydroquinone. The term "residue", as used herein, means any organic structure incorporated into a polymer through a polycondensation and/or an esterification reaction from the corresponding monomer. The term "repeating unit", as used herein, means an organic structure having a dicarboxylic acid residue and a diol residue bonded through an ester group. Thus, for example, the dicarboxylic acid residues may be derived from a dicarboxylic acid monomer or its associated acid halides, esters, salts, anhydrides, and/or mixtures thereof. Furthermore, as used herein, the term "diacid" includes multifunctional acids, for example, branching agents. As used herein, therefore, the term "dicarboxylic acid" is intended to include dicarboxylic acids and any derivative of a dicarboxylic acid, including its associated acid halides, esters, half-esters, salts, half-salts, anhydrides, mixed anhydrides, and/or mixtures thereof, useful in a reaction process with a diol to make a polyester. As used herein, the term "terephthalic acid" is intended to include terephthalic acid itself and residues thereof as well as any derivative of terephthalic acid, including its associated acid halides, esters, half-esters, salts, half-salts, anhydrides, mixed anhydrides, and/or mixtures thereof or residues thereof useful in a reaction process with a diol to make a polyester.

The polyesters used in the present disclosure typically can be prepared from dicarboxylic acids and diols which react in substantially equal proportions and are incorporated into the polyester polymer as their corresponding residues. The polyesters of the present disclosure, therefore, can contain substantially equal molar proportions of acid residues (100 mole%) and diol (and/or multifunctional hydroxyl compound) residues (100 mole%) such that the total moles of repeating units is equal to 100 mole%. The mole percentages provided in the present disclosure, therefore, may be based on the total moles of acid residues, the total moles of diol residues, or the total moles of repeating units. For example, a polyester containing 10 mole% isophthalic acid, based on the total acid residues, means the polyester contains 10 mole% isophthalic acid residues out of a total of 100 mole% acid residues. Thus, there are 10 moles of isophthalic acid residues among every 100 moles of acid residues. In another example, a polyester containing 25 mole% 1,4-cyclohexanedimethanol, based on the total diol residues, means the polyester contains 25 mole% 1,4-cyclohexanedimethanol residues out of a total of 100 mole% diol residues. Thus, there are 25 moles of 1,4-cyclohexanedimethanol residues among every 100 moles of diol residues.

In certain embodiments, terephthalic acid or an ester thereof, for example, dimethyl terephthalate or a mixture of terephthalic acid residues and an ester thereof can make up a portion or all of the dicarboxylic acid component used to form the polyesters useful in the present disclosure. In certain embodiments, terephthalic acid residues can make up a portion or all of the dicarboxylic acid component used to form the polyesters useful in this disclosure. For the purposes of this disclosure, the terms "terephthalic acid" and "dimethyl terephthalate" are used interchangeably herein. In one embodiment, dimethyl terephthalate is part or all of the dicarboxylic acid component used to make the polyesters useful in the present disclosure. In embodiments, ranges of from 70 to 100 mole%; or 80 to 100 mole%; or 90 to 100 mole%; or 99 to 100 mole%; or 100 mole% terephthalic acid and/or dimethyl terephthalate and/or mixtures thereof may be used.

In addition to terephthalic acid, the dicarboxylic acid component of the polyesters useful in the present disclosure can comprise up to 30 mole%, up to 20 mole%, up to 10 mole%, up to 5 mole%, or up to 1 mole% of one or more modifying aromatic dicarboxylic acids. Yet another embodiment contains 0 mole% modifying aromatic dicarboxylic acids. Thus, if present, it is contemplated that the amount of one or more modifying aromatic dicarboxylic acids can range from any of these preceding endpoint values including, for example, 0.01 to 10 mole%, from 0.01 to 5 mole% and from 0.01 to 1 mole%. In one embodiment, modifying aromatic dicarboxylic acids that may be used in the present disclosure include but are not limited to those having up to 20 carbon atoms, and which can be linear, para-oriented, or symmetrical. Examples of modifying aromatic dicarboxylic acids which may be used in this disclosure include, but are not limited to, isophthalic acid, 4,4'-biphenyldicarboxylic acid, 1,4-, 1,5-, 2,6-, 2,7-naphthalenedicarboxylic acid, and trans-4,4'-stilbenedicarboxylic acid, and esters thereof. In one embodiment, the modifying aromatic dicarboxylic acid is isophthalic acid.

The carboxylic acid component of the polyesters useful in the present disclosure can be further modified with up to 10 mole%, such as up to 5 mole% or up to 1 mole% of one or more aliphatic dicarboxylic acids containing 2-16 carbon atoms, for example, cyclohexanedicarboxylic, malonic, succinic, glutaric, adipic, pimelic, suberic, azelaic and/or dodecanedioic dicarboxylic acids. Certain embodiments can also comprise 0.01 to 10 mole%, such as 0.1 to 10 mole%, 1 or 10 mole%, 5 to 10 mole% of one or more modifying aliphatic dicarboxylic acids. Yet another embodiment contains 0 mole% modifying aliphatic dicarboxylic acids. The total mole% of the dicarboxylic acid component is 100 mole%. In one embodiment, adipic acid and/or glutaric acid are provided in the modifying aliphatic dicarboxylic acid component of the polyesters and are useful in the present disclosure.

Esters of terephthalic acid and the other modifying dicarboxylic acids or their corresponding esters and/or salts may be used instead of the dicarboxylic acids. Suitable examples of dicarboxylic acid esters include, but are not limited to, the dimethyl, diethyl, dipropyl, diisopropyl, dibutyl, and diphenyl esters. In one embodiment, the esters are chosen from at least one of the following: methyl, ethyl, propyl, isopropyl, and phenyl esters.

In one embodiment, at least a portion of the residues derived from dicarboxylic acids and glycols, as set forth herein, are derived from recycled monomeric species such as recycled dimethylterephthalate (rDMT), recycled terephthalic acid(rTPA), recycled dimethylisopthalate(rDMI), recycled ethylene glycol(rEG), recycled cyclohexanedimethanol (rCHDM), recycled neopentyl glycol(rNPG), and recycled diethylene glycol(rDEG). Such recycled monomeric species can be obtained from known methanolysis or glycolysis reactions which are utilized to depolymerize various post-consumer recycled polyesters and copolyesters. Similarly, recycled poly(ethylene terephthalate) (rPET) can be utilized as a feedstock (for the dicarboxylic acid and glycol components) in the manufacturing of polyesters of the present disclosure having recycle content. Accordingly, in another embodiment, the polyester compositions of this disclosure comprise at least a portion of the dicarboxylic acid residues and/or glycol residues are derived from (i) recycled monomeric species chosen from rDMT, rTPA, rDMI, rEG, rCHDM, rDEG, rNPG and (ii) rPET,

In some embodiments, compositions that are useful as polyester reactants or intermediates in a reaction scheme to provide a recycle content containing copolyester product. In embodiments, these recycle content compositions derive their recycle content from r-propylene which, in turn, derives its recycle content from r-pyoil. In embodiments, such recycle content compositions can be chosen from r-isobutyraldehyde, r-isobutyric acid, r-isobutyric anhydride, r-dimethyl ketene, rTMCDn or r-TMCD.

In one embodiment, the glycol component of the copolyester compositions useful in the present disclosure can comprise 1,4-cyclohexanedimethanol. In another embodiment, the glycol component of the copolyesters compositions useful in the present disclosure comprise 1,4-cyclohexanedimethanol and 1,3-cyclohexanedimethanol. The molar ratio of cis/trans 1,4-cyclohexandimethanol can vary within the range of 50/50 to 0/100, for example, between 40/60 to 20/80.

In one embodiment, in Component A of the copolyester blend compositions, the total comonomer from glycols and acids other than ethylene glycol (EG), terephthalic acid (TPA), or dimethyl terephthalate (DMT) of the copolyester compositions useful in the present disclosure is from 0 to 15 wt%, 0.1 to 15 wt%, 1 to 15 wt%, 2 to 15 wt%, 3 to 15 wt%, 4 to 15 wt%, 5 to 15 wt%, or from 5 to 10wt%, or from 10 to 15wt%, or from 2 to 15 wt%, or from 2 to 10 wt%, or from 3 to 15 wt%, or from 3 to 10 wt%, or from 4 to 15 wt%, or from 4 to 10 wt%, or from 6 to 15 wt%, or from 6 to 10 wt%, or from 7 to 15 wt%, or from 7 to 10 wt%, or from 8 to 15 wt%, or from 8 to 10 wt%, or from 9 to 15 wt%, or from 9 to 10 wt%, or from 11 to 15 wt%, 12 to 15 wt%, or from 13 to 15 wt%, 14 to 15 wt%, or from 12 to 15 wt%.

In one embodiment, in Component A of the copolyester blend composition, the glycol component of the copolyester compositions useful in this disclosure can contain 0 to 15 mole% of neopentyl glycol based on the total mole% of the glycol component being 100 mole%. In one embodiment, in one component of the blend, the glycol component of the copolyester compositions useful in this disclosure can contain 0 to 10 mole% of neopentyl glycol based on the total mole% of the glycol component being 100 mole%. In one embodiment, the glycol component of the copolyester compositions useful in this disclosure can contain 0 to 5 mole% of neopentyl glycol based on the total mole% of the glycol component being 100 mole%.

In one embodiment, in Component A of the copolyester blend compositions, the glycol component of the copolyester compositions useful in this disclosure can contain 5 to 15 mole% of neopentyl glycol based on the total mole% of the glycol component being 100 mole%. In one embodiment, the glycol component of the copolyester compositions useful in this disclosure can contain 5 to 10 mole% of neopentyl glycol based on the total mole% of the glycol component being 100 mole%. In one embodiment, the glycol component of the copolyester compositions useful in this disclosure can contain 1 to 5 mole% of neopentyl glycol based on the total mole% of the glycol component being 100 mole%. In one embodiment, the glycol component of the copolyesters compositions useful in this disclosure can contain 2 to 5 mole% of neopentyl glycol based on the total mole% of the glycol component being 100 mole%. In one embodiment, the glycol component of the copolyesters compositions useful in this disclosure can contain 3 to 5 mole% of neopentyl glycol based on the total mole% of the glycol component being 100 mole%.

In one embodiment, the glycol component of the copolyesters compositions useful in this disclosure can contain from 0 to 15 mole%, 0 to 10 mole%, 0 to 5 mole%, or from 0 to 4 mole%, or from 0 to 3 mole%, or from 0 to 2 mole%, or from 0 to 1 mole%, or from 0.01 to 5 mole%, or from 0.01 to 4 mole%, or from 0.01 to 3 mole%, or from 0.01 to 2 mole%, or from 0.01 to 1 mole%, or from 1 to 10 mole%, 1 to 5 mole%, or from 2 to 5 mole%, or from 3 to 5 mole%, or from 4 to 5 mole%, or from 2 to 4 mole%, or 3 to 4 mole%, or from 1 to 4 mole%, 1 to 3 mole%, or from 1 to 2 mole%, or from 2 to 3 mole%, or from 2 to 5 mole%, or from 2 to 4 mole%, or from 2 to 3 mole%, or from 3 to 15 mole%, or from 3 to 10 mole%, or from 3 to 9 mole%, or from 3 to 8 mole%, or from 3 to 7 mole%, or from 2 to 15 mole%, or from 2 to 10 mole%, or from 2 to 9 mole%, or from 2 to 8 mole%, or from 2 to 7 mole%, or from 2 to 5 mole%, or from 1 to 15 mole%, or from 1 to 10 mole%, or from 1 to 7 mole%, or from 1 to 5 mole%, or from 1 to 3 mole%, of neopentyl glycol residues, based on the total mole% of the glycol component being 100 mole%.

In one embodiment, in Component A of the copolyester blend compositions, the glycol component of the copolyester compositions useful in this disclosure can contain from 0 to 15 mole% of 1,4-cyclohexanedimethanol based on the total mole% of the glycol component being 100 mole%. In one embodiment, the glycol component of the copolyester compositions useful in this disclosure can contain 0.01 to less than 15 mole% of 1,4-cyclohexanedimethanol based on the total mole% of the glycol component being 100 mole%. In one embodiment, the glycol component of the copolyester compositions useful in this disclosure can contain 0 to 10 mole% of 1,4-cyclohexanedimethanol based on the total mole% of the glycol component being 100 mole%. In one embodiment, the glycol component of the copolyester compositions useful in this disclosure can contain 0.01 to less than 10 mole% of 1,4-cyclohexanedimethanol based on the total mole% of the glycol component being 100 mole%. In one embodiment, the glycol component of the copolyester compositions useful in this disclosure can contain 0.01 to 5 mole% of 1,4-cyclohexanedimethanol based on the total mole% of the glycol component being 100 mole%. In one embodiment, the glycol component of the copolyester compositions useful in this disclosure can contain 0.01 to less than 2 mole% of 1,4-cyclohexanedimethanol based on the total mole% of the glycol component being 100 mole%. In one embodiment, the glycol component of the copolyester compositions useful in this disclosure can contain 2 to 10 mole% of 1,4-cyclohexanedimethanol based on the total mole% of the glycol component being 100 mole%.

In one embodiment, in Component A of the copolyester blend compositions, the glycol component of the copolyester compositions useful in this disclosure can contain from 0 to 15 mole%, or from 0 to 10 mole%, or from 0 to 7 mole%, or from 0 to 5 mole%, or from 0 to 2 mole%, or from 0 to 1 mole%, or from 0.01 to 15 mole%, or from 0.01 to 10 mole%, or from 0.01 to 7 mole%, or from 0.01 to 5 mole%, or from 0.01 to 2 mole%, or from 1 to 15 mole%, or from 1 to 10 mole%, or from 1 to 7 mole%, or from 1 to 5 mole%, or from 1 to 2 mole% 3 to 15 mole%, or from 3 to 14 mole%, or from 3 to 13 mole%, or from 3 to 12 mole%, or from 3 to 11 mole%, or 3 to 10 mole%, or from 3 to 9 mole%, or from 3 to 8 mole%, or from 3 to 7 mole%, or from 2 to 10 mole%, or from 2 to 9 mole%, or from 2 to 8 mole%, or from 2 to 7 mole%, or from 2 to 5 mole%, or from 1 to 7 mole%, or from 1 to 5 mole%, or from 1 to 3 mole%, 1,4-cyclohexanedimethanol residues, based on the total mole% of the glycol component being 100 mole%.

In one embodiment, in Component A of the copolyester blend compositions, the glycol component of the copolyester compositions useful in this disclosure can contain from 0 to 15 mole%, or from 0 to 10 mole%, or from 0 to 7 mole%, or from 0 to 5 mole%, or from 0 to 3 mole%, or from 0 to 2 mole%, or from 0.01 to 15 mole%, or from 0.01 to 10 mole%, or from 0.01 to 7 mole%, or from 0.01 to 5 mole%, or from 0.01 to 2 mole%, or from 0.01 to 1 mole%, or from 1 to 15 mole%, 1 to 10 mole%, or from 1 to 7 mole%, or from 1 to 5 mole%, 1 to 3 mole%, or from 1 to 2 mole%, 3 to 15 mole%, or from 3 to 14 mole%, or from 3 to 13 mole%, or from 3 to 12 mole%, or from 3 to 11 mole%, or 3 to 10 mole%, or from 3 to 9 mole%, or from 3 to 8 mole%, or from 3 to 7 mole%, or from 2 to 10 mole%, or from 2 to 9 mole%, or from 2 to 8 mole%, or from 2 to 7 mole%, or from 2 to 5 mole%, or from 1 to 7 mole%, or from 1 to 5 mole%, or from 1 to 3 mole%, of 2,2,4,4-tetramethyl-1,3-cyclobutanediol residues, based on the total mole% of the glycol component being 100 mole%.

In one embodiment, in Component A of the copolyester blend compositions, the glycol component of the copolyester compositions useful in this disclosure can contain 0 to 15 mole% of 2,2,4,4-tetramethyl-1,3-cyclobutanediol based on the total mole% of the glycol component being 100 mole%. In one embodiment, the glycol component of the copolyester compositions useful in this disclosure can contain 0.01 to less than 15 mole% of 2,2,4,4-tetramethyl-1,3-cyclobutanediol based on the total mole% of the glycol component being 100 mole%. In one embodiment, the glycol component of the copolyester compositions useful in this disclosure can contain 0 to 10 mole% of 2,2,4,4-tetramethyl-1,3-cyclobutanediol based on the total mole% of the glycol component being 100 mole%. In one embodiment, the glycol component of the copolyester compositions useful in this disclosure can contain 0.01 to less than 10 mole% of 2,2,4,4-tetramethyl-1,3-cyclobutanediol based on the total mole% of the glycol component being 100 mole%. In one embodiment, the glycol component of the copolyester compositions useful in this disclosure can contain 0.01 to 5 mole% of 2,2,4,4-tetramethyl-1,3-cyclobutanediol based on the total mole% of the glycol component being 100 mole%. In one embodiment, the glycol component of the copolyester compositions useful in this disclosure can contain 0 to less than 5 mole% of 2,2,4,4-tetramethyl-1,3-cyclobutanediol based on the total mole% of the glycol component being 100 mole%.

In all embodiments, it should be understood that some other glycol residues may be formed in situ during processing. The total amount of diethylene glycol residues can be present in the copolyesters useful in the present disclosure, whether or not formed in situ during processing or intentionally added, or both, in any amount.

For example, in some embodiments, in Component A of the copolyester blend composition, the total amount of diethylene glycol residues whether or not formed in situ during processing or intentionally added or both, can be from 1 to 15 mole%, or from 1 to 10 mole%, or from 2 to 10 mole%, or from 2 to 9 mole%, or from 3 to 9 mole%, or from 3 to 10 mole%, or 3 to 9 mole%, or from 3 to 8 mole%, or from 4 to 10 mole%, or from 4 to 9 mole%, or 4 to 8 mole%, or from 4 to 7 mole%, or, from 5 to 10 mole%, or from 5 to 9 mole%, or 5 to 8 mole%, or from 5 to 7 mole%, of diethylene glycol residues, based on the total mole% of the glycol component being 100 mole%.

In one embodiment, in Component A of the copolyester blend composition, the total amount of diethylene glycol residues present in the copolyesters useful in the present disclosure, whether or not formed in situ during processing or intentionally added or both, can be from 5 mole% or less, or 4 mole% or less, or from 3.5 mole% or less, or from 3.0 mole% or less, or from 2.5 mole% or less, or from 2.0 mole% or less, or from 1.5 mole% or less, or from 1.0 mole% or less, or from 1 to 4 mole%, or from 1 to 3 mole%, or from 1 to 2 mole% of diethylene glycol residues, or from 2 to 8 mole%, or from 2 to 7 mole%, or from 2 to 6 mole%, or from 2 to 5 mole%, or from 3 to 8 mole%, or from 3 to 7 mole%, or from 3 to 6 mole%, or from 3 to 5 mole%, or in some embodiments there is no intentionally added diethylene glycol residues, based on the total mole% of the glycol component being 100 mole%.

In one embodiment, in Component B of the copolyester blend compositions, the total amount of diethylene glycol residues present in the copolyesters useful in the present disclosure, whether or not formed in situ during processing or intentionally added or both, can be from 50 mole% or less, or 40 mole% or less, or from 35 mole% or less, or from 30 mole% or less, or from 25 mole% or less, or from 20 mole% or less, or from 20 to 50 mole%, or from 20 to 40 mole%, or from 20 to 30 mole% of diethylene glycol residues, based on the total mole% of the glycol component being 100 mole%..

For all embodiments, the remainder of the glycol component can comprise ethylene glycol residues in any amount based on the total mole% of the glycol component being 100 mole%. In one embodiment, the copolyesters useful in the present disclosure can contain 50 mole% or greater, or 55 mole% or greater, or 60 mole% or greater, or 65 mole% or greater, or 70 mole% or greater, or 75 mole% or greater, or 80 mole% or greater, or 85 mole% or greater, or 90 mole% or greater, or 95 mole% or greater, or 98 mole% or greater or from 50 to 90 mole%, or from 55 to 90 mole%, or from 50 to 80 mole%, or from 55 to 80 mole%, or from 60 to 80 mole%, or from 50 to 75 mole%, or from 55 to 75 mole%, or from 60 to 75 mole%, or from 65 to 75 mole% of ethylene glycol residues, based on the total mole% of the glycol component being 100 mole%.

For all embodiments, the glycol component of the copolyester compositions useful in the present disclosure can contain up to 10 mole%, , or up to 9 mole%, or up to 8 mole%, or up to 7 mole%, or up to 6 mole%, or up to 5 mole %, or up to 4 mole %, or up to 3 mole %, or up to 2 mole %, or up to 1 mole %, or less of one or more other modifying glycols (other modifying glycols are defined as glycols which are not ethylene glycol, diethylene glycol, 2,2,4,4-tetramethyl-1,3-cyclobutanediol, neopentyl glycol, or 1,4-cyclohexanedimethanol). In certain embodiments, the copolyesters useful in this disclosure can contain 10 mole% or less of one or more other modifying glycols; 5 mole% or less of one or more other modifying glycols; 2mole% or less of one or more other modifying glycols; 1 mole% or less of one or more other modifying glycols. In certain embodiments, the copolyesters useful in this disclosure can contain 5 mole% or less of one or more other modifying glycols. In certain embodiments, the copolyesters useful in this disclosure can contain 3 mole% or less of one or more other modifying glycols. In another embodiment, the copolyesters useful in this disclosure can contain 0 mole % of other modifying glycols. It is contemplated, however, that some other glycol residuals may form in situ so that residual amounts formed in situ are also an embodiment of this disclosure.

In embodiments, the other modifying glycols for use in the copolyesters, if used, as defined herein contain up to 20 carbon atoms or in some embodiments, 2 to 16 carbon atoms. Examples of other modifying glycols include, but are not limited to, 1,2-propanediol, 1,3-propanediol, isosorbide, 1,4-butanediol, 1,5-pentanediol, 2-methyl-1,3-propanediol (MPDiol), 1,6-hexanediol, p-xylene glycol, polytetramethylene glycol, 2,2,4,4-tetramethyl-1,3-cyclobutanediol (TMCD) and mixtures thereof. In one embodiment, isosorbide is an other modifying glycol. In another embodiment, the other modifying glycols include, but are not limited to, at least one of 1,3-propanediol and 1,4-butanediol. In one embodiment, 1,3-propanediol and/or 1,4-butanediol can be excluded. If 1,4- or 1,3-butanediol are used, greater than 4 mole% or greater than 5 mole % can be provided in one embodiment. In one embodiment, at least one other modifying glycol is 1,4-butanediol which present in the amount of 1 to 10 mole%.

In some embodiments, the copolyester compositions according to the present disclosure can optionally comprise from 0 to 10 mole%, for example, from 0 to 5 mole%, from 0 to 1 mole%, 0.01 to 5 mole%, from 0.01 to 1 mole%, from 0.05 to 5 mole%, from 0.05 to 1 mole%, or from 0.1 to 0.7 mole%, based on the total mole percentages of either the glycol or diacid residues; respectively, of one or more residues of a branching monomer, also referred to herein as a branching agent, having 3 or more carboxyl substituents, hydroxyl substituents, or a combination thereof. In certain embodiments, the branching monomer or agent may be added prior to and/or during and/or after the polymerization of the copolyester. In some embodiments, the copolyester(s) useful in the present disclosure can thus be linear or branched.

Examples of branching monomers include, but are not limited to, multifunctional acids or multifunctional alcohols such as trimellitic acid, trimellitic anhydride, pyromellitic dianhydride, trimethylolpropane, glycerol, pentaerythritol, citric acid, tartaric acid, 3-hydroxyglutaric acid and the like. In one embodiment, the branching monomer residues can comprise 0.1 to 0.7 mole% of one or more residues chosen from at least one of the following: trimellitic anhydride, pyromellitic dianhydride, glycerol, sorbitol, 1,2,6-hexanetriol, pentaerythritol, trimethylolethane, and/or trimesic acid. The branching monomer may be added to the copolyester reaction mixture or blended with the copolyester in the form of a concentrate as described, for example, in U.S. Pat. Nos. 5,654,347 and 5,696,176.

The copolyesters useful in the present disclosure can comprise at least one chain extender. Suitable chain extenders include, but are not limited to, multifunctional (including, but not limited to, bifunctional) isocyanates, multifunctional epoxides, including, for example, epoxylated novolacs, and phenoxy resins. In certain embodiments, chain extenders may be added at the end of the polymerization process or after the polymerization process. If added after the polymerization process, chain extenders can be incorporated by compounding or by addition during conversion processes such as injection molding or extrusion.

The amount of chain extender used can vary depending on the specific monomer composition used and the physical properties desired but is generally about 0.1 percent by weight to about 10 percent by weight, such as about 0.1 to about 5 percent by weight, based on the total weight of the copolyester.

It is contemplated that copolyester compositions useful in the present disclosure can possess at least one of the inherent viscosity ranges described herein and at least one of the monomer ranges for the copolyester compositions described herein, unless otherwise stated. It is also contemplated that copolyester compositions useful in the present disclosure can possess at least one of the Tg ranges described herein and at least one of the monomer ranges for the copolyester compositions described herein, unless otherwise stated. It is also contemplated that copolyester compositions useful in the present disclosure can possess at least one of the inherent viscosity ranges described herein, at least one of the Tg ranges described herein, and at least one of the monomer ranges for the copolyester compositions described herein, unless otherwise stated.

For embodiments of this disclosure, the copolyester compositions useful in this disclosure can exhibit at least one of the following inherent viscosities as determined in 60/40 (wt/wt) phenol/ tetrachloroethane at a concentration of 0.25 g/50 ml at 25°C: 0.50 to 1.0 dL/g; 0.60 to 1.0 dL/g; 0.60 to 0.90 dL/g; 0.60 to 0.80 dL/g; 0.6 to 0.75 dL/g; 0.6 to 0.70 dL/g; 0.65 to 0.80 dL/g; 0.70 to 0.80 dL/g; 0.50 to 0.75 dL/g; 0.55 to 0.75 dL/g; 0.58 to 0.75 dL/g; 0.60 to 0.75 dL/g; 0.60 to 0.70 dL/g; 0.58 to 0.70 dL/g; or 0.55 to 0.70 dL/g.

The glass transition temperature (Tg) of the copolyester compositions is determined using a TA DSC 2920 from Thermal Analyst Instrument at a scan rate of 20°C/min. The value of the glass transition temperature is determined during the second heat.

In certain embodiments, the copolyester compositions of this disclosure comprise copolyesters with a Tg of 50°C or greater, or of 60°C or greater, or of 50°C or greater; or 50 to 90°C or 500 to 80°C; or 60 to 70°C; or 60 to 80°C; or 70 to 80°C. In certain embodiments, these Tg ranges can be met with or without at least one plasticizer being added during polymerization.

In one embodiment, the copolyesters can be produced by processes in homogenous solution, by transesterification processes in the melt, and by two phase interfacial processes. Suitable methods include, but are not limited to, the steps of reacting one or more dicarboxylic acids with one or more glycols at a temperature of 100°C. to 315°C. at a pressure of 0.1 to 760 mm Hg for a time sufficient to form a copolyester. See U.S. Pat. No. 3,772,405 for methods of producing copolyesters.

The copolyester in general may be prepared by condensing the dicarboxylic acid or dicarboxylic acid ester with the glycol in the presence of a catalyst at elevated temperatures increased gradually during the course of the condensation up to a temperature of about 225°C to 310°C., in an inert atmosphere, and conducting the condensation at low pressure during the latter part of the condensation, as described in further detail in U.S. Pat. No. 2,720,507.

In some embodiments, during the process for making the copolyester composition useful in the present disclosure, certain agents which colorize the polymer can be added to the melt including toners or dyes. In one embodiment, a bluing toner is added to the melt in order to reduce the b* of the resulting copolyester polymer melt phase product. Such bluing agents include blue inorganic and organic toner(s) and/or dyes. In addition, red toner(s) and/or dyes can also be used to adjust the a* color. Organic toner(s), e.g., blue and red organic toner(s), such as those toner(s) described in U.S. Pat. Nos. 5,372,864 and 5,384,377, can be used. The organic toner(s) can be fed as a premix composition. The premix composition may be a neat blend of the red and blue compounds or the composition may be pre-dissolved or slurried in one of the copolyester's raw materials, e.g., ethylene glycol.

The total amount of toner components added can depend on the amount of inherent yellow color in the base copolyester and the efficacy of the toner. In one embodiment, a concentration of up to about 15 ppm of combined organic toner components and a minimum concentration of about 0.5 ppm can be used. In one embodiment, the total amount of bluing additive can range from 0.5 to 10 ppm. In an embodiment, the toner(s) can be added to the esterification zone or to the polycondensation zone. Preferably, the toner(s) are added to the esterification zone or to the early stages of the polycondensation zone, such as to a prepolymerization reactor. In some embodiments, the toner(s) can be added after polymerization as a compounded master batch.

In some embodiments, the copolyester compositions can also contain from 0.01 to 25% by weight of the overall composition common additives such as colorants, toner(s), dyes, mold release agents, flame retardants, plasticizers, glass bubbles, glass fiber, natural fiber, nucleating agents, friction modifier, stabilizers, including but not limited to, UV stabilizers, thermal stabilizers, and/or reaction products thereof, fillers, and impact modifiers. Examples of commercially available impact modifiers include, but are not limited to, ethylene/propylene terpolymers, functionalized polyolefins such as those containing methyl acrylate and/or glycidyl methacrylate, styrene-based block copolymeric impact modifiers, and various acrylic core/shell type impact modifiers. Residues of such additives are also contemplated as part of the copolyester composition.

Reinforcing materials may be added to the compositions useful in this disclosure. The reinforcing materials may include, but are not limited to, carbon filaments, silicates, mica, clay, talc, titanium dioxide, Wollastonite, glass flakes, beads and fibers, natural fibers, and polymeric fibers and combinations thereof. In one embodiment, the reinforcing materials include glass, such as, fibrous glass filaments, mixtures of glass and talc, glass and mica, and glass and polymeric fibers.

The copolyester blends of the present disclosure can be prepared by any conventional processing techniques known in the art, such as melt blending, melt mixing, compounding via single screw extrusion, compounding via twin-screw extrusion, or any continuous extruder such as a Kokneader extruder, Planetary gear extruder, Henschel extruder, or any batch melt mixing equipment such as a Bandbury mixer, or combinations of the aforementioned. In one embodiment, the copolyester blends are compounded at temperatures of 220-320°C. In one embodiment, the copolyester blends are compounded at temperatures of 220-300°C. In one embodiment, the copolyester blends can be pre-dried at 60-160°C. In one embodiment, the copolyester blends are not pre-dried. In one embodiment, the compounding can occur under vacuum. In one embodiment, the compounding does not occur under vacuum.

In one aspect of the present disclosure, the copolyester compositions further comprise recycled polyethylene terephthalate (rPET) or recycled polyesters. It is desirable that recycled PET (rPET) or recycled polyesters be incorporated back into new molded or extruded articles. Use of rPET or recycled polyesters lowers the environmental footprint of a product offering and improves the overall life-cycle analysis. The use of rPET or recycled polyesters offers economic advantages, and it would reduce the overall amount of packaging-related products sent to landfills or that could potentially end up contaminating oceans or other bodies of water.

There is no limitation on the recycled polyethylene terephthalate (rPET) or recycled polyesters that may be used in the to make blends with the copolyester compositions of the present disclosure. In one embodiment the rPET or recycled polyesters are mechanically recycled. In one embodiment the rPET or recycled polyesters are produced from chemically recycled monomers (produced by any known methods of depolymerization).

In one embodiment, the rPET may have minor modifications such as with up to 5 mole% of isophthalic acid and/or up to 5 mole % of CHDM or other diols. In one embodiment, the recycled PET (rPET) can be virtually any "waste" industrial or post-consumer PET. In one embodiment, the rPET useful in the blend compositions of the present disclosure may be post-consumer recycled PET. In one embodiment, the rPET is post-industrial recycled PET. In one embodiment, the rPET is post-consumer PET from soft drink bottles. In one embodiment, scrap PET fibers, scrap PET films, and poor-quality PET polymers are also suitable sources of rPET. In one embodiment, the recycled PET comprises substantially PET, although other copolyesters can also be used, particularly where they have a similar structure as PET, such as PET copolymers or the like. In one embodiment, the rPET is clean. In one embodiment, the rPET is substantially free of contaminants. In one embodiment, the rPET may be in the form of flakes.

In one embodiment, the copolyester compositions comprise 0 to 50wt% of rPET. In one embodiment, the copolyester compositions comprise 1 to 40wt% of rPET. In one embodiment, the copolyester compositions comprise 2 to 30wt% of rPET. In one embodiment, the copolyester compositions comprise 3 to 20wt% of rPET. In one embodiment, the copolyester compositions comprise 4 to 15wt% of rPET. In one embodiment, the copolyester compositions comprise 5 to 10wt% of rPET.

In one embodiment, up to about 50% by weight of rPET can be incorporated into the copolyester compositions of the present disclosure. In one embodiment, the rPET/copolyester blend is 15-50 wt% of rPET. In one embodiment, the rPET/copolyester blend is 25-40 wt% of rPET. In one embodiment, the rPET/copolyester blend is 20-30 wt% of rPET. In one embodiment rPET/copolyester blend is 15-50 wt% of rPET and 50-85 wt% of at least one copolyester.

The copolyester/rPET blends can be prepared by conventional processing techniques known in the art, such as melt blending, melt mixing, compounding via single screw extrusion, compounding via twin-screw extrusion, batch melt mixing equipment or combinations of the aforementioned. In one embodiment, the copolyester/rPET blends are compounded at temperatures of 220-320°C. In one embodiment, the copolyester/rPET blends are compounded at temperatures of 220-300°C. In one embodiment, the copolyester/rPET blends can be pre-dried at 60-160°C. In one embodiment, the copolyester/rPET blends are not pre-dried. In one embodiment, the compounding can occur under vacuum. In one embodiment, the compounding does not occur under vacuum.

The following examples further illustrate how the copolyesters of the present disclosure can be made and evaluated, and they are intended to be purely exemplary and are not intended to limit the scope thereof. Unless indicated otherwise, parts are parts by weight, temperature is in degrees C (Celsius) or is at room temperature, and pressure is at or near atmospheric.

### Examples

This disclosure can be further illustrated by the following examples of preferred embodiments thereof, although it will be understood that these examples are included merely for purposes of illustration and are not intended to limit the scope of the disclosure unless otherwise specifically indicated.

The copolyester compositions of the present disclosure are blends of copolyesters that meets the definition of RIC-1 and has sufficient properties to be used as an adhesive layer.

The Resin Identification Code (RIC-1) definition - 1 is for PET materials that meet the following criteria:
1. The polymers must be made from at least 90% by weight, of monomers that would make pure PET. These monomers include TPA, DMT and EG; and
2. The polymers optionally have a crystalline melting point (Tₘ) between 225°C and 255°C. The Tₘ is measured on the 2^{nd} heat cycle of a DSC measurement conducted at 10°C/minute

As illustrated in Table 1, one embodiment of the present disclosure is a physical blend composition of component A - 100 mol% terephthalic acid, 37 mole % DEG, 63 mol% EG with component B -100 mol% terephthalic acid, 3.5 mol% CHDM, 96.5 mol% EG (Example #1 blended with Example #2). Example #8 is a 50:50 of Example #1 and Example #2. Example #8 meets both elements of the criteria for the RIC-1 definition. The weight % of PET in this formulation is a little over 90% and the crystalline melting point is about 230°C (this is within the defined range of 225°C to 255°C).

Without being bound by any theory, the blends suitable for use in this disclosure are physical blends of the copolyester resins. Reactor grade compositions meeting the compositional range requirements do not meet the criteria of the RIC-1 definition. But the physical blends of the copolyester compositions enable the adhesive properties and RIC1 properties required in the present disclosure.

The chemical composition of Example #8 is component A - 100 mol% terephthalic acid, 37 mole % DEG, 63 mol% EG with component B -100 mol% terephthalic acid, 3.5 mol% CHDM, 96.5 mol% EG. The 50:50 blend has a Tₘ of about 230°C. The same composition was targeted and produced in a lab reactor (see examples #14, #15 and #16), and this resulted in a Tₘ of about 214°C. This Tₘ is too low to meet the RIC-1 criteria.

Blending the resin allows the compositions to be advantaged by the individual properties of the two resins. The blends provide good adhesion properties compared to other amorphous adhesive resins. This is illustrated in Table 2. Table 2 shows the self-sealing temperature and the temperature needed to bond to Example #1. By blending the two resins rather than making a fully homogeneous reactor grade material, the adhesive properties of the Example 1 resin are retained at a higher level. This effect is more pronounced when observing the 2^{nd} cycle Tₘ in the DSC data in Table 3. The pure Example #2 resin has a 2^{nd} cycle Tₘ of 240°C. While the pure Example #1 resin does not have a second cycle Tₘ; but, when these two resins are blended together the blend has a 2^{nd} cycle Tₘ of about 230°C. However, if a single reactor grade composition with the same composition as the blend is made in a flask, and fully mixed at a molecular level, then the 2^{nd} cycle Tₘ is only 214°C. Blending the two materials allows the crystalline behavior of resin to be retained sufficiently to meet the RIC-1 requirements. However, a reactor grade resin with a similar composition will not meet the RIC-1 requirement. Thus, physical blends are required in the present disclosure to obtain the desired properties.

Example #1 is a PET modified with 37 mole % DEG. The DEG level has an effect on lowering the T_{g} of the blend composition and improving the adhesive properties. For example, Examples #3 and Example #4 illustrate that adhesive layers with 20 and 23 mole% DEG are suitable for use as an adhesive formulation in some embodiments of this disclosure. The range of DEG levels is from about 20 mole% to about 50 mole%. Example #5 is a PET modified with 3.5 mole% CHDM. In some embodiments, the range for CHDM is from 0 mole% to about 5 mole%. In other embodiments, the range for CHDM is up to about 10 mole%. If the level of CHDM is too high, it will significantly impact the level of example #1 composition that can be added to the blend and still stay within the RIC-1 definition requirements. In some embodiments, the use of other glycols and diacids can be used to modify Example #1 or Example #2. However, in some embodiments, the range of other modifying glycols or diacids may need to remain at up to 10 mole% to maintain the RIC-1 requirements.

**Table 1: Examples**

| Example # | Production Method | Chemical composition and blend ratio | RIC-1 Rule 1 %PET | RIC-1 Rule 2 MP |
|---|---|---|---|---|
| Example #1 | Melt phase polymerization and crystallization | 100 mol% terephthalic acid, 37 mole % DEG, 63 mole % EG | No 83.94% | No |
| Example #2 | Melt phase polymerization and solid stating | 100 mol% terephthalic acid, 3.5 mol% CHDM, 96.5 mol% EG | Yes 97.82% | Yes |
| Example #3 | Melt phase polymerization | 100 mol% terephthalic acid; 20 mol% CHDM, 10 mol% DEG, 70 mol% EG | No 84.16% | No |
| Example #4 | Melt phase polymerization | 100 mol% terephthalic acid; 22 mol% CHDM, 12 mol% DEG, 66 mol% EG | No 81.82% | No |
| Example #5 | Melt phase polymerization | 100 mol% terephthalic acid, 31 mol% CHDM, 69 mol% EG | No 82.38% | No |
| Example #6 | Melt compounded | 60% Example #1 and 40% Example #2 | No 88.97% | No |
| | | Blend composition | | |
| | | 100 mol% terephthalic acid, 23 mole % DEG, 1.4 mole % CHDM, 75.6 mol% EG | | |
| Example #7 | Pellet/Pellet Blend | 60% Example #1 and 40% Example #2 | No 88.97% | No |
| | | Blend composition | | |
| | | 100 mol% terephthalic acid, 23 mole % DEG, 1.4 mole % CHDM, 75.6 mol% EG | | |
| Example #8 | Melt compounded | 50% Example #1 and 50% Example #2 | Yes 90.26% | Yes |
| | | Blend composition | | |
| | | 100 mol% terephthalic acid, 19.5 mole % DEG, 2.1 mole % CHDM, 78.4 mol% EG | | |
| Example #9 | Melt compounded | 40% Example #1 and 60% Example #2 | Yes 91.56% | Yes |
| | | Blend composition | | |
| | | 100 mol% terephthalic acid, 16 mole % DEG, 2.1 mole % CHDM, 81.9 mol% EG | | |
| Example #10 | Pellet/Pellet Blend | 40% Example #1 and 60% Example #2 | Yes 91.56% | Yes |
| | | Blend composition | | |
| | | 100 mol% terephthalic acid, 16 mole % DEG, 2.1 mole % CHDM, 81.9 mol% EG | | |
| Example #11 | Melt compounded | 25% Example #1 and 75% Example #2 | Yes 93.55% | Yes |
| | | Blend composition | | |
| | | 100 mol% terephthalic acid, 10.75 mole % DEG, 2.6 mole % CHDM, 86.65 mol% EG | | |
| Example #12 | Melt Compounded | 50% Example #1 and 50% Example #5 | No 83.15% | No |
| | | Blend composition | | |
| | | 100 mol% terephthalic acid, 18.5 mole % DEG, 15.5 mole % CHDM, 66 mol% EG | | |
| Example #13 | Pellet/pellet blend | 50% Example #1 and 50% Example #5 | No 83.15% | No |
| | | Blend composition | | |
| | | 100 mol% terephthalic acid, 18.5 mole % DEG, 15.5 mole % CHDM, 66 mol% EG | | |
| Example #14 | Lab scale melt phase only | Target 50:50 blend of Example #1 and Example #2 | Yes 91.07% | No |
| | | Produced Blend composition | | |
| | | 100 mol% terephthalic acid, 16 mole % DEG, 3 mole % CHDM, 81 mol% EG | | |
| Example #15 | Lab scale melt phase only | Target 50:50 blend of Example #1 and Example #2 | Yes | No |
| | | | 90.69% | |
| | | Produced Blend composition | | |
| | | 100 mol% terephthalic acid, 17.8 mole % DEG, 2.3 mole % CHDM, 79.9 mol% EG | | |
| Example #16 | Lab scale melt phase only | Target 50:50 blend of Example #1 and Example #2 | Yes | No |
| | | | 90.56% | |
| | | Produced Blend composition | | |
| | | 100 mol% terephthalic acid, 18 mole % DEG, 2.33 mole % CHDM, 79.67 mol% EG | | |

| | | | | |
|---|---|---|---|---|
| - The % PET calculation was based on the ratio of starting monomers to produce the formula. The total weight of TPA and EG in the expected formula divided by the total monomer weight of the formulation. The resin compositions for Examples #1-#5 are manufactured by and available from Eastman Chemical Company. | | | | |

For the heat sealing data in Table 2, the seal testing was conducted on 2.54 cm (one inch) wide samples on a Kopp LabormasterHCT 3000 Heat Seal Hot Tack Tester. Two 2.54 cm (one-inch) strips of material are sealed together at a pressure of about 276 N (Newtons) for a duration of 0.1 seconds. For some of the testing, the copolyesters were self-sealed (a sample of Example #1 copolyester was sealed to another sample of Example #1 copolyester), and in the other tests each copolyesters samples was sealed to Example 2. The samples were allowed to cool for 60 seconds at room temperature and then tested for peel force.

**Table 2: Heat sealing data**

| Example # | Self-Sealing temperature | Peel force (in Newtons) for Self-Sealing | Sealing temperature to Example #2 | Peel force (in Newtons) for Sealing with Example #2 |
|---|---|---|---|---|
| Example #1 | 80°C | 10.13N | 90°C to 100°C | 5.3N |
| Example #3 | 80°C | 3.81N | 100°C | 10.7 |
| Example #4 | 80°C | | 100°C | 2.42N |
| Example #5 | 110°C | 4.77N | 110°C | 3.2N |
| Example #6 | 100°C | 4.46N | 100°C | 5.74N |
| Example #7 | 90°C | 3.155N | 100°C | 1.84N |
| Example #8 | 100°C | 8.2N | 100°C | 3.10N |
| Example #9 | 90°C | 10.205N | 100°C | 5.68N |
| Example #10 | 90°C | 2.185N | 100°C | 8.255N |
| Example #11 | 100°C | 3.41N | 100°C | 2.63N |
| Example #12 | 100°C | 8.225N | 100°C | 15.51N |
| Example #13 | 100°C | 3.115 | 100°C | 10.29N |

**Table 3: DSC Data**

| Example # | 1^{st} cycle Tₘ (°C) | 2^{nd} cycle T_{g} (°C) | 2^{nd} cycle Tₘ(°C) | RIC - 1, Rule 2 |
|---|---|---|---|---|
| Example #1 | 168.85 | 52.08 | None detected | no |
| Example #2 | 233.3 | 78.06 | 240.71 | yes |
| Example #6 | 240.43 | 62.06 | 221.1 | no |
| Example #8 (50:50) | 241.53 | 64.26 | 229.8 | yes |
| Example #9 (40:60) | 242.79 | 66.95 | 230.3 | yes |
| Example #11 (25:75) | 244.12 | 73.87 | 237.36 | yes |
| Example #12 (50:50) | N/A | 63.4 | N/A | no |
| Example #14 (50:50 lab prep) | 216.27 | 67.25 | 214.47 | no |
| Example #15 (50:50 lab prep) | 152.9 | 65.0 | 212.3 | no |
| Example #16 (50:50 lab prep) | 155.56 | 64.55 | 212.04 | no |

## Claims

1. An adhesive composition comprising a copolyester blend which comprises
A) 25-75 wt% of at least one copolyester composition comprising:
(a) a dicarboxylic acid component comprising:
(i) 85 to 100 mole % of terephthalic acid residues, and
(ii) 0 to 15 mole % of aromatic and/or aliphatic dicarboxylic acid residues having up to 20 carbon atoms; and
(b) a glycol component comprising:
(i) 0 to 15 mole % of one or more of 2,2,4,4-tetramethyl-1,3-cyclobutanediol (TMCD) residues; 1,4-cyclohexanedimethanol (CHDM) residues; neopentyl glycol (NPG) residues, and diethylene glycol (DEG) residues, whether or not formed in situ; and
wherein the remainder of the glycol component comprises:
(ii) residues of ethylene glycol (EG), and
(iii) optionally, 0 to 10 mole% of the residues of at least one other modifying glycol;
wherein the total mole% of the dicarboxylic acid component is 100 mole%, and wherein the total mole% of the glycol component is 100 mole%; and
B) 75-25 wt% of at least one copolyester composition comprising
(a) a dicarboxylic acid component comprising:
(i) 85 to 100 mole % of terephthalic acid residues, and
(ii) 0 to 15 mole % of aromatic and/or aliphatic dicarboxylic acid residues having up to 20 carbon atoms; and
(b) a glycol component comprising:
(i) 20 to 50 mole % DEG residues; and
(ii) 50-80 mole % of ethylene glycol (EG) residues, and
(iii) optionally, 0 to 10 mole% of the residues of at least one other modifying glycol;
wherein the total mole% of the dicarboxylic acid component is 100 mole%, and wherein the total mole% of the glycol component is 100 mole%.

2. The adhesive composition of claim 1, further comprising at least one polyester with recycle content, preferably recycle content polyethylene terephthalate (rPET).

3. The adhesive composition of claim 1, wherein the EG is recycled EG (rEG); or wherein the CHDM is rCHDM or the CHDM produced from rDMT; or wherein the TMCD is rTMCD; or wherein the DEG is recycled DEG or the DEG is produced from rEG.

4. The adhesive composition of claim 1, wherein the copolyester blend has 0-10 wt% total comonomer content from glycols and acids other than ethylene glycol (EG), terephthalic acid (TPA), or dimethyl terephthalate (DMT) or any combinations thereof must be less than 10 wt%.

5. The adhesive composition of claim 1, wherein the copolyester blend has a melting temperature (Tₘ) of 225-255°C, wherein the melting temperature is determined as outlined in the description.

6. The adhesive composition of claim 1, wherein the glass transition temperature (Tg) of the copolyester blend is from 50C to 80°C, preferably from 60 to 75°C, wherein the glass transition temperature is determined as outlined in the description.

7. The adhesive composition of claim 1, wherein the inherent viscosity of the copolyester blend is from 0.60 to 0.9 dL/g, wherein the inherent viscosity is determined as outlined in the description.

8. The adhesive composition of claim 1, wherein the adhesive composition has a peel force of 2-12 N, wherein the peel force is determined as outlined in the description.

9. A substrate having a coating comprising the adhesive composition of claim 1.

10. A paper or polyester substrate having a coating comprising the adhesive composition of claim 1.

11. An ovenable food container having parts thereof bonded with the adhesive composition of claim 1.

12. A thermoformed container or article having parts thereof bonded with the adhesive composition of claim 1.

13. A lidding film adhered to an article with the adhesive composition of claim 1.

14. A recyclable substrate comprising a polyester container or base tray, a peelable film coupled to the container or tray to form a receiving space therebetween, and an adhesive layer to adhere the film to the container or tray, wherein the adhesive layer comprises a copolyester blend comprising
A) 45-65 wt% of at least one copolyester composition comprising:
(a) a dicarboxylic acid component comprising:
(i) 85 to 100 mole % of terephthalic acid residues, and
(ii) 0 to 15 mole % of aromatic and/or aliphatic dicarboxylic acid residues having up to 20 carbon atoms; and
(b) a glycol component comprising:
(i) 1 to 10 mole % of one or more of 2,2,4,4-tetramethyl-1,3-cyclobutanediol (TMCD) residues; 1,4-cyclohexanedimethanol (CHDM) residues; NPG residues, and DEG residues, whether or not formed in situ, and
(ii) 90-99 mole% of ethylene glycol (EG) residues; and wherein the total mole% of the dicarboxylic acid component is 100 mole%, and wherein the total mole% of the glycol component is 100 mole%; and
B) 35-55 wt% of at least one copolyester composition comprising
(a) a dicarboxylic acid component comprising:
(i) 85 to 100 mole % of terephthalic acid residues, and
(ii) 0 to 15 mole % of aromatic and/or aliphatic dicarboxylic acid residues having up to 20 carbon atoms; and
(b) a glycol component comprising:
(i) 20 to 50 mole % DEG residues; and
(ii) 50-80 mole % of ethylene glycol (EG) residues, and
wherein the total mole% of the dicarboxylic acid component is 100 mole%, and wherein the total mole% of the glycol component is 100 mole%.

15. The substrate of claim 10 or claim 14, wherein the substrate is recyclable in a PET recycle stream.

## Patentansprüche

1. Klebstoffzusammensetzung, umfassend eine Copolyestermischung, die Folgendes umfasst
A) 25-75 Gew.-% mindestens einer Copolyesterzusammensetzung, umfassend:
(a) eine Dicarbonsäurekomponente, umfassend:
(i) 85 bis 100 Mol-% Terephthalsäurerückstände und
(ii) 0 bis 15 Mol-% aromatische und/oder aliphatische Dicarbonsäurerückstände, die bis zu 20 Kohlenstoffatome aufweisen; und
(b) eine Glykolkomponente, umfassend:
(i) 0 bis 15 Mol-% eines oder mehrere von 2,2,4,4-Tetramethyl-1,3-cyclobutandiol(TMCD)-Rückständen; 1,4-Cyclohexandimethanol(CHDM)-Rückständen; Neopentylglykol(NPG)-Rückständen und Diethylenglykol(DEG)-Rückständen, unabhängig davon, ob diese in situ ausgebildet werden oder nicht; und
wobei der Rest der Glykolkomponente Folgendes umfasst:
(ii) Rückstände von Ethylenglykol (EG) und
(iii) optional 0 bis 10 Mol-% der Rückstände von mindestens einem anderen modifizierenden Glykol;
wobei das Gesamtmol-% der Dicarbonsäurekomponente 100 Mol-% ist und wobei das Gesamtmol-% der Glykolkomponente 100 Mol-% ist; und
B) 75-25 Gew.-% mindestens einer Copolyesterzusammensetzung, umfassend
(a) eine Dicarbonsäurekomponente, umfassend:
(i) 85 bis 100 Mol-% Terephthalsäurerückstände und
(ii) 0 bis 15 Mol-% aromatische und/oder aliphatische Dicarbonsäurerückstände, die bis zu 20 Kohlenstoffatome aufweisen; und
(b) eine Glykolkomponente, umfassend:
(i) 20 bis 50 Mol-% DEG-Rückstände; und
(ii) 50-80 Mol-% Ethylenglykol(EG)-Rückstände und
(iii) optional 0 bis 10 Mol-% der Rückstände von mindestens einem anderen modifizierenden Glykol;
wobei das Gesamtmol-% der Dicarbonsäurekomponente 100 Mol-% ist und
wobei das Gesamtmol-% der Glykolkomponente 100 Mol-% ist.

2. Klebstoffzusammensetzung nach Anspruch 1, ferner mindestens ein Polyester mit Recyclinggehalt, vorzugsweise Polyethylenterephthalat (rPET) mit Recyclinggehalt umfassend.

3. Klebstoffzusammensetzung nach Anspruch 1, wobei das EG recyceltes EG (rEG) ist; oder wobei das CHDM rCHDM oder das aus rDMT hergestellte CHDM ist; oder wobei das TMCD rTMCD ist; oder wobei das DEG recyceltes DEG ist oder aus DEG aus rEG hergestellt ist.

4. Klebstoffzusammensetzung nach Anspruch 1, wobei die Copolyestermischung einen Gesamtcomonomergehalt von 0-10 Gew.-% aus anderen Glykolen und Säuren als Ethylenglykol (EG), Terephthalsäure (TPA) oder Dimethylterephthalat (DMT) aufweist oder eine beliebige Kombinationen davon muss weniger als 10 Gew.-% betragen.

5. Klebstoffzusammensetzung nach Anspruch 1, wobei die Copolyestermischung eine Schmelztemperatur (Tₘ) von 225-255 °C aufweist, wobei die Schmelztemperatur wie in der Beschreibung angegeben bestimmt ist.

6. Klebstoffzusammensetzung nach Anspruch 1, wobei die Glasübergangstemperatur (Tg) der Copolyestermischung von 50 bis 80 °C, vorzugsweise von 60 bis 75 °C, ist, wobei die Glasübergangstemperatur wie in der Beschreibung angegeben bestimmt ist.

7. Klebstoffzusammensetzung nach Anspruch 1, wobei die inhärente Viskosität der Copolyestermischung von 0,60 bis 0,9 dL/g ist, wobei die inhärente Viskosität wie in der Beschreibung angegeben bestimmt ist.

8. Klebstoffzusammensetzung nach Anspruch 1, wobei die Klebstoffzusammensetzung eine Schälkraft von 2-12 N aufweist, wobei die Schälkraft wie in der Beschreibung angegeben bestimmt ist.

9. Substrat, das eine Beschichtung aufweist, die die Klebstoffzusammensetzung nach Anspruch 1 umfasst.

10. Papier- oder Polyestersubstrat, das eine Beschichtung aufweist, die die Klebstoffzusammensetzung nach Anspruch 1 umfasst.

11. Ofenfähiger Lebensmittelbehälter, der Teile davon aufweist, die mit der Klebstoffzusammensetzung nach Anspruch 1 verbunden sind.

12. Warmgeformter Behälter oder Gegenstand, der Teile davon aufweist, die mit der Klebstoffzusammensetzung nach Anspruch 1 verbunden sind.

13. Deckelfolie, die mit der Klebstoffzusammensetzung nach Anspruch 1 an einen Gegenstand geklebt ist.

14. Recycelbares Substrat, umfassend einen Polyesterbehälter oder eine Basisablage, eine abziehbare Folie, die mit dem Behälter oder der Ablage gekoppelt ist, um einen Empfangsraum dazwischen auszubilden, und eine Klebstoffschicht, um die Folie an den Behälter oder die Wanne zu kleben, wobei die Klebstoffschicht eine Copolyestermischung umfasst, umfassend
A) 45-65 Gew.-% mindestens einer Copolyesterzusammensetzung, umfassend:
(a) eine Dicarbonsäurekomponente, umfassend:
(i) 85 bis 100 Mol-% Terephthalsäurerückstände und
(ii) 0 bis 15 Mol-% aromatische und/oder aliphatische Dicarbonsäurerückstände, die bis zu 20 Kohlenstoffatome aufweisen; und
(b) eine Glykolkomponente, umfassend:
(i) 1 bis 10 Mol-% eines oder mehrere von 2,2,4,4-Tetramethyl-1,3-cyclobutandiol(TMCD)-Rückständen; 1,4-Cyclohexandimethanol(CHDM)-Rückständen; NPG-Rückständen und DEG-Rückständen, unabhängig davon, ob diese in situ ausgebildet werden oder nicht und
(ii) 90-99 Mol-% Ethylenglykol(EG)-Rückstände; und
wobei das Gesamtmol-% der Dicarbonsäurekomponente 100 Mol-% ist und
wobei das Gesamtmol-% der Glykolkomponente 100 Mol-% ist; und
B) 35-55 Gew.-% mindestens einer Copolyesterzusammensetzung, umfassend
(a) eine Dicarbonsäurekomponente, umfassend:
(i) 85 bis 100 Mol-% Terephthalsäurerückstände und
(ii) 0 bis 15 Mol-% aromatische und/oder aliphatische Dicarbonsäurerückstände, die bis zu 20 Kohlenstoffatome aufweisen; und
(b) eine Glykolkomponente, umfassend:
(i) 20 bis 50 Mol-% DEG-Rückstände; und
(ii) 50-80 Mol-% Ethylenglykol(EG)-Rückstände und
wobei das Gesamtmol-% der Dicarbonsäurekomponente 100 Mol-% ist und
wobei das Gesamtmol-% der Glykolkomponente 100 Mol-% ist.

15. Substrat nach Anspruch 10 oder Anspruch 14, wobei das Substrat in einem PET-Recyclingstrom recyclebar ist.

## Revendications

1. Composition adhésive comprenant un mélange de copolyester qui comprend
A) 25 à 75 % en poids d'au moins une composition de copolyester comprenant :
(a) un composant d'acide dicarboxylique comprenant :
(i) 85 à 100 % en moles de résidus d'acide téréphtalique, et
(ii) 0 à 15 % en moles de résidus d'acides dicarboxyliques aromatiques et/ou aliphatiques ayant jusqu'à 20 atomes de carbone ; et
(b) un composant glycol comprenant :
(i) 0 à 15 % en moles d'un ou de plusieurs parmi des résidus de 2,2,4,4-tétraméthyl-1,3-cyclobutanediol (TMCD) ; des résidus de 1,4-cyclohexanediméthanol (CHDM) ; des résidus de néopentylglycol (NPG) et des résidus de diéthylèneglycol (DEG), qu'ils soient formés ou non in situ ; et
dans laquelle le reste du composant glycol comprend :
(ii) des résidus d'éthylène glycol (EG), et
(iii) éventuellement, de 0 à 10 % en moles des résidus d'au moins un autre glycol modificateur ;
dans laquelle le pourcentage en moles total du composant acide dicarboxylique est de 100 % en moles, et dans laquelle le pourcentage en moles total du composant glycol est de 100 % en moles ; et
B) 75 à 25 % en poids d'au moins une composition de copolyester comprenant
(a) un composant d'acide dicarboxylique comprenant :
(i) 85 à 100 % en moles de résidus d'acide téréphtalique, et
(ii) 0 à 15 % en moles de résidus d'acides dicarboxyliques aromatiques et/ou aliphatiques ayant jusqu'à 20 atomes de carbone ; et
(b) un composant glycol comprenant :
(i) 20 à 50 % en moles de résidus DEG ; et
(ii) 50 à 80 % en moles de résidus d'éthylène glycol (EG), et
(iii) éventuellement, de 0 à 10 % en moles des résidus d'au moins un autre glycol modificateur ;
dans laquelle le pourcentage en moles total du composant acide dicarboxylique est de 100 % en moles, et
dans laquelle le pourcentage en moles total du composant glycol est de 100 % en moles.

2. Composition adhésive selon la revendication 1, comprenant en outre au moins un polyester à contenu recyclé, de préférence du polyéthylène téréphtalate à contenu recyclé (rPET).

3. Composition adhésive selon la revendication 1, dans laquelle l'EG est de l'EG recyclé (rEG) ; ou dans laquelle le CHDM est du rCHDM ou du CHDM produit à partir de rDMT ; ou dans laquelle le TMCD est du rTMCD ; ou dans laquelle le DEG est du DEG recyclé ou le DEG est produit à partir de rEG.

4. Composition adhésive selon la revendication 1, dans laquelle le mélange de copolyester a une teneur totale en comonomères de 0 à 10 % en poids provenant de glycols et d'acides autres que l'éthylène glycol (EG), l'acide téréphtalique (TPA) ou le téréphtalate de diméthyle (DMT) ou toute combinaison de ceux-ci doit être inférieure à 10 % en poids.

5. Composition adhésive selon la revendication 1, dans laquelle le mélange de copolyester a une température de fusion (Tₘ) de 225 à 255 °C, dans laquelle la température de fusion est déterminée comme indiqué dans la description.

6. Composition adhésive selon la revendication 1, dans laquelle la température de transition vitreuse (Tg) du mélange de copolyester est de 50 °C à 80 °C, de préférence de 60 °C à 75 °C, dans laquelle la température de transition vitreuse est déterminée comme indiqué dans la description.

7. Composition adhésive selon la revendication 1, dans laquelle la viscosité inhérente du mélange de copolyester est de 0,60 à 0,9 dL/g, dans laquelle la viscosité inhérente est déterminée comme indiqué dans la description.

8. Composition adhésive selon la revendication 1, dans laquelle la composition adhésive a une force de pelage de 2 à 12 N, dans laquelle la force de pelage est déterminée comme indiqué dans la description.

9. Substrat ayant un revêtement comprenant la composition adhésive selon la revendication 1.

10. Substrat en papier ou en polyester ayant un revêtement comprenant la composition adhésive selon la revendication 1.

11. Récipient alimentaire allant au four dont certaines parties sont collées avec la composition adhésive selon la revendication 1.

12. Récipient ou article thermoformé dont certaines parties sont collées avec la composition adhésive selon la revendication 1.

13. Film d'operculage adhérant à un article avec la composition adhésive selon la revendication 1.

14. Substrat recyclable comprenant un récipient ou un plateau de base en polyester, un film pelable couplé au récipient ou au plateau pour former un espace de réception entre ceux-ci, et une couche adhésive pour faire adhérer le film au récipient ou au plateau, dans lequel la couche adhésive comprend un mélange de copolyester comprenant
A) 45 à 65 % en poids d'au moins une composition de copolyester comprenant :
(a) un composant d'acide dicarboxylique comprenant :
(i) 85 à 100 % en moles de résidus d'acide téréphtalique, et
(ii) 0 à 15 % en moles de résidus d'acides dicarboxyliques aromatiques et/ou aliphatiques ayant jusqu'à 20 atomes de carbone ; et
(b) un composant glycol comprenant :
(i) 1 à 10 % en moles d'un ou de plusieurs parmi des résidus de 2,2,4,4-tétraméthyl-1,3-cyclobutanediol (TMCD) ; des résidus de 1,4-cyclohexanediméthanol (CHDM) ; des résidus de NPG et des résidus de DEG, qu'ils soient formés ou non in situ, et
(ii) 90 à 99 % en moles de résidus d'éthylène glycol (EG) ; et dans lequel le pourcentage en moles total du composant acide dicarboxylique est de 100 % en moles, et
dans lequel le pourcentage en moles total du composant glycol est de 100 % en moles ; et
B) 35 à 55 % en poids d'au moins une composition de copolyester comprenant
(a) un composant d'acide dicarboxylique comprenant :
(i) 85 à 100 % en moles de résidus d'acide téréphtalique, et
(ii) 0 à 15 % en moles de résidus d'acides dicarboxyliques aromatiques et/ou aliphatiques ayant jusqu'à 20 atomes de carbone ; et
(b) un composant glycol comprenant :
(i) 20 à 50 % en moles de résidus DEG ; et
(ii) 50 à 80 % en moles de résidus d'éthylène glycol (EG), et dans lequel le pourcentage en moles total du composant acide dicarboxylique est de 100 % en moles, et
dans lequel le pourcentage en moles total du composant glycol est de 100 % en moles.

15. Substrat selon la revendication 10 ou la revendication 14, dans lequel le substrat est recyclable dans un flux de recyclage du PET.
